# FASCICULE DE BREVET EUROPEEN

(11) **EP 2 092 818 B1**
(45) Date de publication et mention de la délivrance du brevet: **18.04.2012**
(21) Numéro de dépôt: 09305075.5
(22) Date de dépôt: 28.01.2009
(51) Int. Cl.: A01D 34/54, A01D 34/81, A01D 34/82

(54) **Bloc de travail pour la coupe et/ou le broyage des végétaux**
Arbeitsblock zum Zerschneiden und/oder Häckseln von Pflanzen
Chopping board for cutting and/or grinding vegetables

(30) Priorité: 25.02.2008 FR 0800997
(43) Date de publication de la demande: 26.08.2009
(73) Titulaire: Noremat, 54710 Ludres (FR)
(72) Inventeur: Bachmann, Christophe, 54000, Nancy (FR); Eudes, Frédéric, 88000, Epinal (FR)
(74) Mandataire: Abello, Michel

(56) Documents cités:
- EP-A- 1 048 198
- EP-A- 1 151 651
- DE-A1-102004 055 902
- FR-A- 2 685 993
- FR-A- 2 698 237
- GB-A- 2 251 536
- US-A- 3 799 579

## Description

La présente invention concerne d'une manière générale les blocs de travail utilisés pour la coupe et/ou le broyage des végétaux au sol, par exemple ceux mis en oeuvre pour le nettoyage des bordures de routes, talus, fossés...

De manière connue en soi, de tels blocs de travail sont équipés d'un rotor portant des outils de coupe ou de broyage, entraîné en rotation à grande vitesse par des moyens de prise de force d'un engin porteur tel qu'un véhicule de travaux publics ou un tracteur.

Le rotor est positionné horizontalement au-dessus du sol à traiter.

La hauteur à laquelle est positionné ledit rotor est déterminée en fonction de la dimension des outils qu'il porte et de la hauteur que l'utilisateur désire laisser à la végétation à la suite de la coupe.

Cette hauteur est réglée en modifiant la position d'un rouleau palpeur par rapport audit rotor.

Pour des raisons évidentes de sécurité, les blocs de travail sont équipés d'une enveloppe de protection constituée par un capot enfermant tous leurs composants et ne laissant ouverte que la partie de la face inférieure nécessaire au travail des outils de coupe. Ce capot est destiné d'une part à empêcher l'accès aux outils et d'autre part à limiter les projections vers l'extérieur de la machine. En effet, lorsque le rotor tourne à très grande vitesse pour couper les végétaux, des cailloux, mottes de terre ou autres objets se trouvant sur le sol peuvent être projetés par la rotation des outils de coupe.

Le document GB 2 251 536 A décrit les caractéristiques du préambule de la revendication 1.

De manière habituelle, le rouleau palpeur est porté par le capot et la position dudit capot par rapport au rouleau palpeur est modifiée en vue de régler la hauteur de coupe.

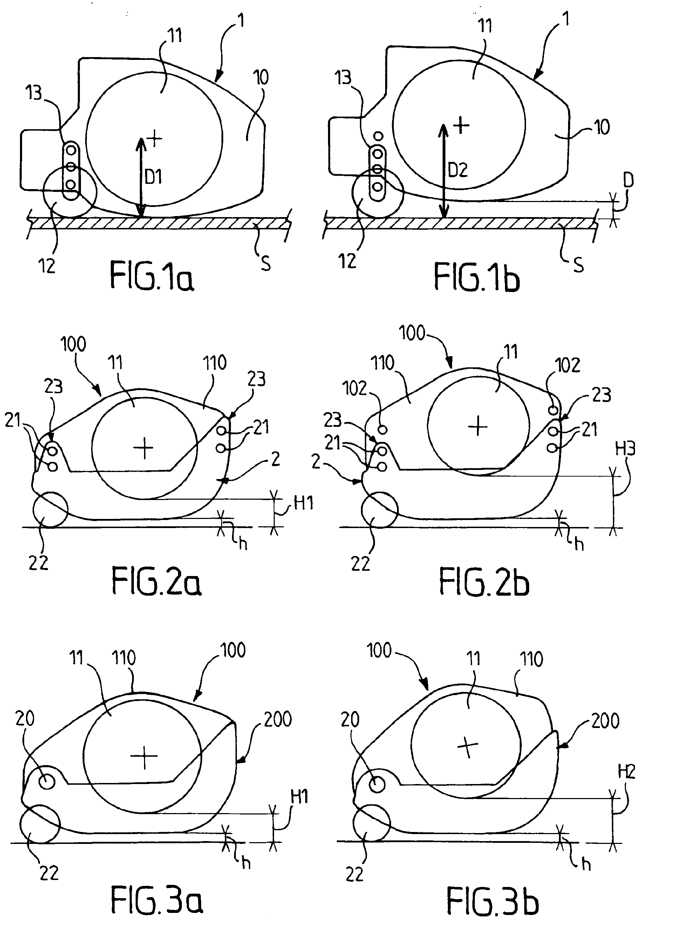

Les figures 1a et 1b représentent schématiquement un bloc de travail 1 de type connu équipé d'un rotor muni d'outils de coupe, symbolisé par le cylindre 11, positionné sous un capot 10, et d'un rouleau palpeur 12 porté par des bras 13 fixés audit capot 10.

Dans la position basse du bloc de travail 1 représentée à la figure 1a, les bras 13 portant le rouleau palpeur 12 sont fixés au capot 10 dans la position la plus haute de sorte que ledit rouleau palpeur 12 soit dans sa position la plus haute par rapport audit capot et donc la plus proche de l'axe du rotor. Dans cette disposition, l'axe du rotor 11 est à une distance D1 minimale du sol S et la coupe est effectuée très près du sol.

Dans la position haute du bloc de travail 1 représentée à la figure 1b, les bras 13 portant le rouleau palpeur 12 sont fixés au capot 10 dans leur position la plus basse de sorte que ledit rouleau palpeur 12 soit dans sa position la plus basse par rapport audit capot et donc la plus éloignée de l'axe du rotor. Dans cette disposition, l'axe du rotor 11 est à une distance D2 maximale par rapport au sol S et une coupe haute est effectuée.

Comme visible aux dessins, la partie inférieure du capot 10 s'étend à une distance D du sol lorsque le bloc de travail 1 est en position haute ce qui laisse un espace non négligeable pour d'éventuelles projections vers l'extérieur de la machine.

La présente invention tend à améliorer la sécurité des blocs de travail en proposant des moyens permettant d'éviter de tels risques de projections lorsque la coupe n'est pas réalisée à la hauteur minimale, en position basse du bloc de travail.

A cet effet, le bloc de travail pour la coupe et/ou le broyage des végétaux comportant un rotor portant des outils et un rouleau palpeur pour le réglage de la hauteur de coupe, et équipé d'une enveloppe de protection comportant un capot ne laissant ouverte que la partie de la face inférieure nécessaire au travail des outils dans lequel l'enveloppe de protection comporte deux panneaux latéraux, caractérisé en ce que le bloc comporte une jupe périphérique anti-projections montée mobile par rapport audit capot et globalement constituée desdits deux panneaux latéraux et de deux panneaux transversaux, avant et arrière, pour laisser un espace libre de hauteur faible sous l'enveloppe de protection.

Le bloc de travail selon l'invention est encore remarquable en ce que :
- la jupe périphérique anti-projections s'étend circonférentiellement le long des bords périphériques du capot,
- la jupe périphérique anti-projections est mobile en translation, parallèlement à elle-même, dans la direction verticale par rapport audit capot,
- la jupe périphérique anti-projections est mobile en translation, parallèlement à elle-même, dans une direction oblique dirigée vers le bas et vers l'arrière par rapport audit capot,
- la jupe périphérique anti-projections est accrochée sur le capot par des moyens d'accrochage insérés dans des orifices de réglage du capot et de la jupe périphérique formés dans des zones de réglage prévues sur le pourtour dudit capot et de ladite jupe périphérique,
- la jupe périphérique anti-projections est mobile en rotation par rapport au capot,
- ladite jupe périphérique anti-projections est montée sur le capot autour d'un axe,
- la jupe périphérique anti-projections comporte un châssis positionné sous le capot,
- au moins une bavette et au moins un patin sont portés par le châssis,
- le rouleau palpeur est fixé sur la jupe périphérique anti-projections.

L'invention sera mieux comprise grâce à la description qui va suivre donnée à titre d'exemple non limitatif en référence aux dessins annexés dans lesquels :
- les figures 1a et 1b représentent schématiquement un bloc de travail suivant l'art antérieur respectivement en position basse et en position haute de coupe,
- les figures 2a et 2b représentent schématiquement un bloc de travail suivant une première variante de réalisation de l'invention dans deux positions de coupe,
- les figures 3a et 3b représentent schématiquement un bloc de travail suivant une seconde variante de réalisation de l'invention dans deux positions de coupe,
- les figures 4a, 4b et 4c représentent schématiquement un bloc de travail suivant une troisième variante de réalisation de l'invention dans trois positions de coupe,
- la figure 5 montre un exemple de réalisation d'un bloc de travail mettant en oeuvre l'invention,
- la figure 6 montre le bloc de travail de la figure 5 dans une position haute de coupe.

Suivant l'invention et comme visible aux figures 2 à 6 jointes, l'enveloppe de protection du bloc de travail 100 est constituée en deux parties : un capot 110 et une jupe périphérique anti-projections 2 montée mobile par rapport audit capot 110.

Le capot 110 constitue la partie supérieure de l'enveloppe du bloc de travail 100 et isole le rotor muni des outils de coupe de l'extérieur en empêchant tout accès audit rotor par le dessus ou par les côtés.

Au dessin, le rotor muni des outils de coupe est symbolisé par le cylindre 11 qu'il définit lorsqu'il est en rotation durant le travail de coupe ou de broyage des végétaux.

La jupe périphérique anti-projections 2 suivant l'invention s'étend le long des bords périphériques globalement verticaux du capot 110, elle est globalement constituée de deux panneaux latéraux, droite et gauche, et de deux panneaux transversaux, avant et arrière.

Dans l'exemple de réalisation des figures 2a et 2b, ladite jupe périphérique 2 est mobile en translation, parallèlement à elle-même, dans la direction verticale par rapport audit capot 110.

Cette jupe périphérique 2 est accrochée sur le capot 110 par des moyens d'accrochage, tels que des vis ou des broches, insérés dans des orifices de réglage 102 du capot 110 et 21 de la jupe 2 formés dans des zones de réglage prévues sur le pourtour dudit capot 110 et de ladite jupe 2.

Les zones de réglages de la jupe 2 sont par exemple constituées par des extensions verticales 23 de celle-ci.

Dans l'exemple de réalisation représenté au dessin, lesdites zones de réglage sont au nombre de quatre et situées près des extrémités avant et arrière des parois latérales de la jupe 2 et du capot 110.

La jupe 2 comporte deux orifices de réglage 21 dans chaque zone de réglage tandis que le capot en comporte autant que nécessaire pour permettre d'effectuer au mieux le réglage en position dans la direction verticale de ladite jupe 2 par rapport au capot 110.

Dans la position représentée à la figure 2a, la machine est en position basse afin d'effectuer une coupe à la hauteur H1 et la jupe 2 est positionnée dans sa position la plus haute sur le capot 110.

Dans la position représentée à la figure 2b, la machine est dans une position relevée par rapport à la position représentée à la figure 2a, pour laquelle elle effectue une coupe à une hauteur H3 supérieure à H1.

Lors de la modification de la hauteur de coupe du bloc de travail, la position de la jupe 2 par rapport au capot 110 est ajustée en enlevant les moyens d'accrochage non représentés au dessin, en faisant coulisser verticalement la jupe 2 par rapport au capot 110 et en repositionnant les moyens d'accrochage dans les orifices de réglage 21 de la jupe et 102 du capot.

Au dessin, la jupe 2 est représentée abaissée d'un cran par rapport à la position de la figure 2a, l'orifice de réglage 102 supérieur du capot 110 est découvert et inutilisé.

Comme visible au dessin, le réglage de la position en hauteur de la jupe 2 par rapport au capot 110 permet d'augmenter la dimension de la partie de l'enveloppe de protection du bloc de travail 1 située en-dessous du capot 110 de sorte que l'espace libre entre le bas de l'enveloppe de protection du bloc de travail et le sol ait toujours une hauteur h peu importante quelle que soit la hauteur de coupe qu'il est prévu de réaliser.

Cette disposition permet de limiter les risques de projections vers l'extérieur de l'enveloppe de protection du bloc de travail au cours du travail quelle que soit la hauteur de la coupe à réaliser.

Dans les exemple de réalisation représentés au dessin, le rouleau palpeur 22 destiné à régler la hauteur de coupe du bloc de travail 100 est fixé sur la jupe périphérique 2 suivant l'invention.

Cette disposition n'est pas indispensable mais elle est préférée car elle facilite les opérations de réglage de la hauteur de coupe et de la position de la jupe périphérique 2 par rapport au capot 110.

En effet, lorsque le rouleau palpeur est fixé sur le capot du bloc de travail, il est nécessaire de régler la position en hauteur dudit rouleau palpeur par rapport audit capot 110 pour définir la hauteur de coupe, puis de régler la position de la jupe périphérique 2 par rapport audit capot 110.

Lorsque le rouleau palpeur 22 est monté sur la jupe périphérique 2, son réglage en hauteur par rapport au capot 110, en vue de définir la hauteur de coupe, est réalisé en même temps que le réglage de la position de ladite jupe périphérique 2 par rapport au capot 110.

Cette disposition permet également de réduire les durées d'intervention pour le réglage de la hauteur de coupe.

Dans l'exemple de réalisation des figures 3a et 3b, la jupe périphérique 200 est mobile en rotation par rapport au capot 110 de la machine 100.

A cet effet, comme visible au dessin, ladite jupe 200 est montée sur le capot 110 autour d'un axe 20. Des moyens non représentés au dessin, assurent le blocage de la jupe 200 dans la position de réglage angulaire déterminée par l'utilisateur.

Dans la position basse de la machine représentée à la figure 3a, en vue de réaliser une coupe à la hauteur H1, la jupe 200 est dans sa position haute c'est-à-dire qu'elle a été entraînée en rotation dans le sens inverse des aiguilles d'une montre jusqu'à sa position extrême.

Pour effectuer une coupe à une hauteur H2 supérieure à H1, la position angulaire de la jupe 200 par rapport au capot 110 est modifiée en entraînant celle-ci en rotation par rapport au capot 110 dans le sens des aiguilles d'une montre jusqu'à la position pour laquelle la partie inférieure du cylindre 11, défini par la rotation du rotor équipé des outils de coupe, est à la hauteur H2 recherchée au-dessus du sol.

Comme visible au dessin, l'enveloppe de protection obtenue grâce à l'invention ne laisse ouvert qu'un espace libre de hauteur h faible.

Des moyens non représenté aux dessins peuvent être mis en oeuvre afin d'entraîner le bloc de travail en rotation par rapport à la jupe 200, celle-ci restant dans une position prédéterminée par rapport au sol.

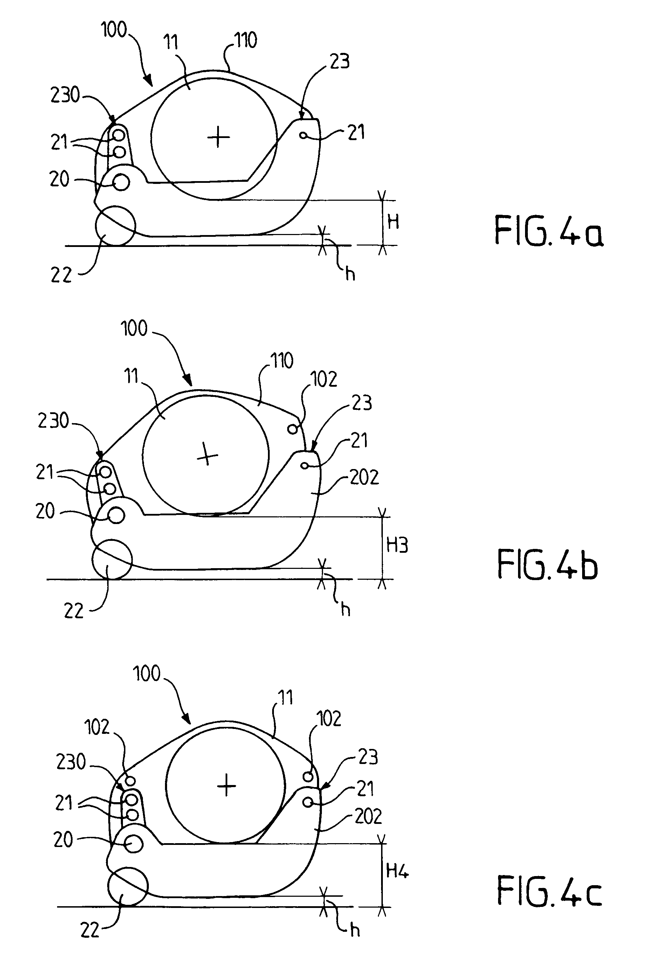

Dans l'exemple de réalisation représenté aux figures 4a à 4c, la jupe 202 est mobile en translation et en rotation par rapport au capot 110.

A cet effet, ladite jupe 202 porte une barrette de réglage 230 verticale dont la position relative par rapport au capot 110 est fixée en insérant, comme dans l'exemple de réalisation des figures 2a et 2b, des moyens d'accrochage dans ses orifice de réglage 21 et dans les orifices de réglage 102 appropriés du capot 110.

La jupe 202 porte ladite barrette de réglage 230 par l'intermédiaire d'un axe 20 autour duquel la jupe 202 est mobile en rotation par rapport à ladite barrette de réglage 230.

Cette disposition permet de régler la position de la jupe 202 par rapport au capot 110 d'une part en l'entraînant en rotation autour de l'axe 20 comme représenté à la figure 4b montrant une position de ladite jupe 202 pour une coupe à la hauteur H3 et d'autre part en la déplaçant parallèlement à elle-même dans la direction verticale comme représenté à la figure 4c montrant une position de ladite jupe 202 pour une coupe à la hauteur H4.

La mise en oeuvre d'une machine 100 selon la variante de réalisation des figures 4a à 4c permet d'effectuer un réglage plus précis de la hauteur de coupe tout en conservant l'avantage de ne laisser qu'un espace libre de hauteur h faible sous l'enveloppe de protection de la machine.

Comme pour le bloc de travail représenté aux figures 3a et 3b, des moyens non représentés aux dessins peuvent être mis en oeuvre afin d'entraîner le bloc de travail en rotation par rapport à la jupe 202, celle-ci restant dans une position prédéterminée par rapport au sol.

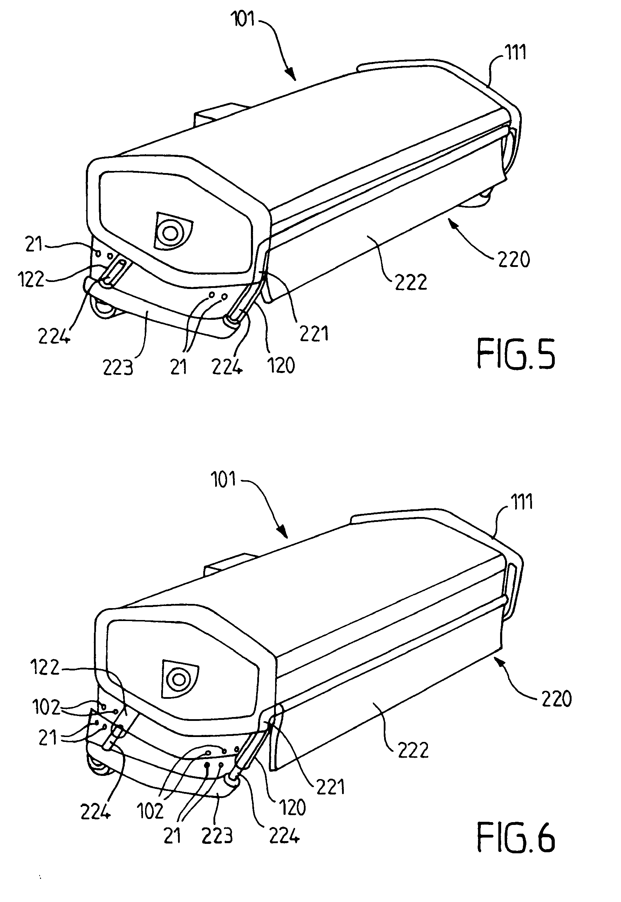

Les figures 5 et 6 montrent un exemple de mise en oeuvre de l'invention sur un bloc de travail 101 de coupe de végétaux.

Comme visible au dessin, le bloc de travail 101 est équipé d'un capot 111 et d'une jupe 220 mobile en translation parallèlement à elle-même dans une direction oblique dirigée vers le bas et vers l'arrière par rapport audit capot 111.

Dans l'exemple de réalisation représenté au dessin, la jupe 220 comporte un châssis 221 positionné autour du capot 111 et monté coulissant par rapport à celui-ci sur des montants obliques 102 au moyen de tiges de réglage 224.

La jupe 220 comporte deux bavettes 222 disposées sous les côtés avant et arrière du châssis 221. Ces bavettes 222 sont en un matériau flexible de sorte qu'elles peuvent être en appui sur le sol au cours du travail de coupe et être déformées pour s'adapter aux irrégularités du sol.

Des patins profilés 223 sont positionnés sur les bords latéraux du châssis 221.

La hauteur de la jupe est déterminée par la mise en place de moyens d'accrochage dans les orifices 21 et 102 formés respectivement dans la jupe 220 et dans le capot 111.

La combinaison du déplacement oblique dirigé vers le bas et vers l'arrière de la jupe 220 par rapport au capot 111 et du profil de l'avant des patins 223 permet de manière tout à fait avantageuse d'améliorer l'avance du bloc de travail dans la végétation à couper.

D'autres variantes de réalisation non représentées au dessin peuvent être mises en oeuvre pour assurer le réglage de la position de la jupe 220 par rapport au capot 111, par exemple des manivelles entraînant des tiges de réglage en rotation pour déplacer la jupe par rapport au capot du bloc de travail.

## Revendications

1. Bloc de travail (1, 101) pour la coupe et/ou le broyage des végétaux comportant un rotor (11) portant des outils et un rouleau palpeur (12, 22) pour le réglage de la hauteur de coupe, et équipé d'une enveloppe de protection (100) comportant un capot (10, 110, 111) ne laissant ouverte que la partie de la face inférieure nécessaire au travail des outils, dans lequel l'enveloppe de protection (100) comporte deux panneaux latéraux, **caractérisé en ce que** le bloc comporte une jupe périphérique (2, 200, 202, 220) anti-projections montée mobile par rapport audit capot (110, 111) et globalement constituée desdits deux panneaux latéraux et de deux panneaux transversaux, avant et arrière, pour laisser un espace libre de hauteur faible sous l'enveloppe de protection.

2. Bloc de travail selon la revendication 1, **caractérisé en ce que** la jupe périphérique (2, 200, 202, 220) anti-projections s'étend le long des bords périphériques du capot (110, 111).

3. Bloc de travail selon la revendication 1 ou selon la revendication 2, **caractérisé en ce que** la jupe périphérique (2, 202) anti-projections est mobile en translation, parallèlement à elle-même, dans la direction verticale par rapport audit capot (110).

4. Bloc de travail selon la revendication 1 ou selon la revendication 2, **caractérisé en ce que** la jupe périphérique (220) anti-projections est mobile en translation, parallèlement à elle-même, dans une direction oblique dirigée vers le bas et vers l'arrière par rapport audit capot (111).

5. Bloc de travail selon la revendication 3 ou selon la revendication 4, **caractérisé en ce que** la jupe périphérique (2, 202, 220) anti-projections est accrochée sur le capot (110) par des moyens d'accrochage insérés dans des orifices de réglage (102, 21) du capot (110, 111) et de la jupe périphérique (2, 202, 220) formés dans des zones de réglage prévues sur le pourtour dudit capot (110, 111) et de ladite jupe périphérique (2, 202, 220).

6. Bloc de travail selon l'une quelconque des revendications précédentes, **caractérisé en ce que** la jupe périphérique (200, 202) anti-projections est mobile en rotation par rapport au capot (110).

7. Bloc de travail selon la revendication 6, **caractérisé en ce que** ladite jupe périphérique (200, 202) anti-projections est montée sur le capot (110) autour d'un axe (20).

8. Bloc de travail selon l'une quelconque des revendications 1 à 5, **caractérisé en ce que** la jupe périphérique (220) anti-projections comporte un châssis (221) positionné sous le capot (111).

9. Bloc de travail selon la revendication 8, **caractérisé en ce que** au moins une bavette (222) et au moins un patin profilé (223) sont portés par le châssis (221).

10. Bloc de travail selon l'une quelconque des revendications précédentes, **caractérisé en ce que** le rouleau palpeur (22) est fixé sur la jupe périphérique (2, 200, 202, 220) anti-projections.

## Claims

1. Work block (1, 101) for chopping and/or grinding plants comprising a rotor (11) containing tools and a sensory wheel (12, 22) for adjusting the chopping length, and fitted with a protective case (100) comprising a hood (10, 110, 111) which only exposes the section of the underside necessary for the tools to function, wherein the protective case (100) comprises two side panels, **characterised in that** the block comprises a mounted peripheral skirt (2, 200, 202, 220) spray guard which moves in relation to the aforementioned hood (110, 111) and largely constituted by the two aforementioned side panels and by two transverse panels, front and rear, to leave a small space beneath the protective case.

2. Work block according to claim 1, **characterised in that** the peripheral skirt (2, 200, 202, 220) spray guard runs along the peripheral edges of the hood (110, 111).

3. Work block according to claim 1 or according to claim 2, **characterised in that** the peripheral skirt (2, 202) spray guard can be slid, parallel to itself, in a vertical direction towards the aforementioned hood (110).

4. Work block according to claim 1 or according to claim 2, **characterised in that** the peripheral skirt (220) spray guard can be slid, parallel to itself, in a diagonal direction towards the bottom and the top in relation to the aforementioned hood (111).

5. Work block according to claim 3 or claim 4, **characterised in that** the peripheral skirt (2, 202, 220) spray guard is attached to the hood (110) by attaching means inserted into the adjusting holes (102, 21) in the hood (110, 111) and in the peripheral skirt (2, 202, 220) formed in the proposed areas of adjustment on the perimeter of the aforementioned hood (110, 111) and of the aforementioned peripheral skirt (2, 202, 220).

6. Work block according to any one of the previous claims, **characterised in that** the peripheral skirt (200, 202) spray guard can be rotated around the hood (110).

7. Work block according to claim 6, **characterised in that** the aforementioned peripheral skirt (200, 202) spray guard is mounted on the hood (110) around an axis (20).

8. Work block according to any claim between 1 and 5, **characterised in that** the peripheral skirt (220) spray guard comprises a frame (221) located beneath the hood (111).

9. Work block according to claim, **characterised in that** at least one bib (222) and at least one streamlined pad (223) are supported by the frame (221).

10. Work block according to any one of the previous claims, **characterised in that** the sensory wheel (22) is attached to the peripheral skirt (2, 200, 202, 220) spray guard.

## Patentansprüche

1. Arbeitsblock (1, 101) zum Zerschneiden und/oder Häckseln von Pflanzen mit einem Rotor (11), an dem sich Geräte sowie ein Tastrad (12, 22) für die Höheneinstellung des Schnittes befinden, der mit einem Schutzmantel (100) versehen ist, welcher eine Haube (10, 110, 111) besitzt, die nur einen Teil der Unterseite offen lässt, welche für die Arbeit der Geräte erforderlich ist, wobei der Schutzmantel (100) zwei Seitenwände aufweist, **dadurch gekennzeichnet, dass** der Block eine umlaufende Schürze (2, 200, 202, 220) mit Spritzschutz besitzt, die gegenüber der Haube (110, 111) beweglich montiert ist im wesentlichen aus den beiden Seitenwänden und aus zwei quer verlaufenden Wänden vorn und hinten besteht, um unter dem Schutzmantel einen freien Raum geringer Höhe zu lassen.

2. Arbeitsblock nach Anspruch 1, **dadurch gekennzeichnet, dass** die umlaufende Schürze (2, 200, 202, 220) mit Spritzschutz entlang den Umfangsrändern der Haube (110, 111) verläuft.

3. Arbeitsblock nach Anspruch 1 oder nach Anspruch 2, **dadurch gekennzeichnet, dass** die umlaufende Schürze (2, 202) mit Spritzschutz in vertikaler Richtung gegenüber der Haube (110) parallel zu sich selbst verschiebbar ist.

4. Arbeitsblock nach Anspruch 1 oder nach Anspruch 2, **dadurch gekennzeichnet, dass** die umlaufende Schürze (220) mit Spritzschutz in einer Richtung schräg nach unten und nach hinten gegenüber der Haube (111) parallel zu sich selbst verschiebbar ist.

5. Arbeitsblock nach Anspruch 3 oder nach Anspruch 4, **dadurch gekennzeichnet, dass** die umlaufende Schürze (2, 202, 220) mit Spritzschutz an der Haube (110) eingehängt ist, und zwar mit Hilfe von Einhängevorrichtungen, die in die Einstellöffnungen (102, 21) der Haube (110, 111) und der umlaufenden Schürze (2, 202, 220) mit Spritzschutz eingeschoben sind, wobei die Öffnungen in den Einstellbereichen gebildet sind, welche am Umfang der Haube (110, 111) und der umlaufenden Schürze (2, 202, 220) mit Spritzschutz vorgesehen sind.

6. Arbeitsblock nach einem der vorhergehenden Ansprüche, **dadurch gekennzeichnet, dass** die umlaufende Schürze (200, 202) mit Spritzschutz gegenüber der Haube (110) drehbar ist.

7. Arbeitsblock nach Anspruch 6, **dadurch gekennzeichnet, dass** die umlaufende Schürze (200, 202) mit Spritzschutz um eine Achse (20) an der Haube (110) montiert ist.

8. Arbeitsblock nach einem der Ansprüche 1 bis 5, **dadurch gekennzeichnet, dass** die umlaufende Schürze (220) mit Spritzschutz einen Rahmen (221) besitzt, der unter der Haube (111) angeordnet ist.

9. Arbeitsblock nach Anspruch 8, **dadurch gekennzeichnet, dass** sich an dem Rahmen (221) mindestens ein Schmutzfänger (222) und mindestens eine profilierte Kufe (223) befinden.

10. Arbeitsblock nach einem der vorhergehenden Ansprüche, **dadurch gekennzeichnet, dass** das Tastrad (22) an der umlaufenden Schürze (2, 200, 202, 220) mit Spritzschutz befestigt ist.
